Europäisches Patentamt

European Patent Office

Office européen des brevets

(19)

(11) Numéro de publication : **0 102 259**
**B1**

(12) **FASCICULE DE BREVET EUROPÉEN**

(45) Date de publication du fascicule du brevet :
21.01.87

(51) Int. Cl.⁴ : **B 62 M 25/04**

(21) Numéro de dépôt : **83401342.7**

(22) Date de dépôt : **29.06.83**

(54) **Dispositif de commande pour dérailleurs.**

(30) Priorité : **22.07.82 FR 8212800**

(43) Date de publication de la demande :
**07.03.84 Bulletin 84/10**

(45) Mention de la délivrance du brevet :
**21.01.87 Bulletin 87/04**

(84) Etats contractants désignés :
**BE DE GB IT LU NL**

(56) Documents cités :
**EP-A- 0 053 776**
**DE-A- 2 650 011**
**FR-A- 2 399 355**
**FR-A- 2 424 179**
**US-A- 4 055 093**
**US-A- 4 279 174**

(73) Titulaire : **HURET ET SES FILS Société dite:**
**60 Avenue Félix Faure**
**F-92000 Nanterre (FR)**

(72) Inventeur : **Coue, Maurice Emmanuel Louis**
**6 Résidence du Vieux Puits**
**F-78810 Feucherolles (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention concerne les dérailleurs pour cycles et plus particulièrement les dispositifs de commande de ces dérailleurs.

On sait que les cycles ou les bicyclettes modernes sont le plus souvent équipés d'un dérailleur arrière ou dérailleur de roue libre et d'un dérailleur avant ou dérailleur de pédalier. Afin d'élargir les plages de démultiplication, la tendance est à l'augmentation du nombre des pignons de la roue libre, le chiffre de 5 ou 6 pignons étant devenu courant. Il en résulte que l'amplitude du déplacement latéral de la chaîne est importante et qu'il est essentiel, pour que cette chaîne fonctionne dans des conditions satisfaisantes, de choisir convenablement le plateau du pédalier en fonction des pignons de roue libre utilisés. C'est ainsi que la chaîne ne doit pas se trouver simultanément sur le plus petit pignon et sur le petit plateau, ou sur le plus grand pignon et sur le plus grand plateau car elle ne fonctionne plus alors en ligne, son rendement s'en trouvant diminué alors que les risques de saut ou de ruptures se trouvent par contre accrus.

Par ailleurs, il arrive assez fréquemment que l'utilisateur effectue une fausse manœuvre, étant donné que les organes de manœuvre des deux dérailleurs doivent habituellement être actionnés dans des sens opposés pour obtenir une variation dans le même sens du rapport de démultiplication établi entre le pédalier et la roue arrière.

On connaît en outre le brevet DE-A-2 650 011, correspondant au préambule de la revendication 1, qui décrit dans un mode de réalisation, un dispositif de commande des dérailleurs de roue libre et de pédalier d'une bicyclette. Ce dispositif comprend une manette unique montée à rotation sur un support pour commander conjointement les deux dérailleurs de la bicyclette. Deux cames sont calées sur la manette et sont associées chacune à un levier correspondant avec lequel elle est susceptible de coopérer. Chaque levier est monté oscillant à une extrémité sur une platine et est relié, à son extrémité opposée, respectivement à l'un des deux dérailleurs, par l'intermédiaire d'un câble correspondant.

Par rotation de la manette, les cames sont amenées à coopérer avec les leviers en déplaçant ces derniers en fonction de leur profil de telle façon que, par rotation progressive de la manette à partir de la position de la chaîne de la bicyclette où celle-ci relie le plus petit pignon de la roue libre au grand plateau du pédalier, la chaîne passe successivement du plus petit pignon au plus grand pignon sans changer de plateau, puis directement sur le plus petit pignon et sur le petit plateau et enfin successivement de ce plus petit pignon jusqu'au plus grand pignon en restant sur le petit plateau du pédalier.

La présence des cames introduit dans une certaine mesure une liaison à course morte entre les deux leviers, mais avec un tel dispositif toutes les combinaisons possibles de liaison entre les différents pignons de la roue libre et des plateaux du pédalier sont sélectionnées successivement par rotation progressive de la manette de sorte que la chaîne est amenée à occuper des positions « croisées » et à ne pas fonctionner en ligne, au risque de sauter ou se rompre tout en fournissant dans de telles positions, un rendement de transmission médiocre.

De plus, il existe des ruptures dans la variation des rapports de démultiplication car dans ce dispositif, au moment où le mécanisme de liaison à course morte n'intervient plus, la chaîne passe brusquement et simultanément d'un plateau de pédalier à l'autre et d'une roue libre extrême à l'autre roue libre extrême. La course de la manette est deux fois plus importante que dans un dispositif classique. Le nombre de positions de cette manette est élevé et il est donc difficile pour l'utilisateur de sélectionner le rapport optimal.

Le but de cette invention est de remédier à ces inconvénients et de fournir un dispositif qui permette de simplifier la manœuvre des dérailleurs, sur un cycle ou véhicule analogue, et qui évite des positions défavorables de la chaîne.

Elle a donc pour objet un dispositif de commande pour deux dérailleurs, respectivement de roue libre et de pédalier, pour cycle ou analogue, comprenant deux organes d'actionnement montés rotatifs sur un support et reliés respectivement à l'un des deux dérailleurs par un câble de transmission et une manette formant un organe de manœuvre des deux organes d'actionnement, ces derniers étant reliés l'un à l'autre par l'intermédiaire d'un mécanisme de liaison à course morte, caractérisé en ce que la manette est fixée à l'organe d'actionnement du dérailleur de roue libre et en ce que la liaison à course morte est telle que l'entraînement de l'organe d'actionnement associé au dérailleur de pédalier se produit pour deux positions différentes de la manette de manœuvre, selon que cette dernière est déplacée dans un sens ou dans l'autre.

Dans cet agencement, les organes d'actionnement peuvent être de façon classique deux pièces comportant à leur périphérie une gorge et sur chacune desquelles est accrochée l'extrémité d'un câble de transmission dont l'autre extrémité est reliée au dérailleur correspondant. La manette peut être solidaire de l'organe d'actionnement ou venue de matière avec lui.

Grâce à cet agencement un organe de manœuvre unique permet de commander simultanément les deux dérailleurs et la liaison à course morte prévue dans la transmission permet de décaler la commande du dérailleur de pédalier par rapport à la commande du dérailleur de roue libre.

L'invention va être décrite plus en détail ci-dessous en se référant au dessin annexé donné uniquement à titre d'exemple et sur lequel :

la Figure 1 est une vue partielle avec arrachement montrant en vue latérale un dispositif suivant l'invention monté sur une bicyclette ;

la Figure 2 est une vue en coupe transversale suivant la ligne 2-2 de la Fig. 1 ;

les Figures 3A à 3D sont des vues en coupe suivant la ligne 3-3 de la Fig. 2, montrant le dispositif dans quatre positions successives lors du passage du plus petit au plus grand rapport de démultiplication ;

les Figures 4A à 4D sont des vues analogues montrant les positions successives du dispositif lors du passage du plus grand rapport de démultiplication au plus petit ;

les Figures 5 et 6 sont des schémas montrant les positions successives de la chaîne dans les deux séquences correspondant aux Fig. 3A-3D et 4A-4D, respectivement ;

la Figure 7 et la Figure 8 représentent le dispositif dans deux positions différentes ; et

la Figure 9 est une vue analogue à celle de la Fig. 2 d'une variante.

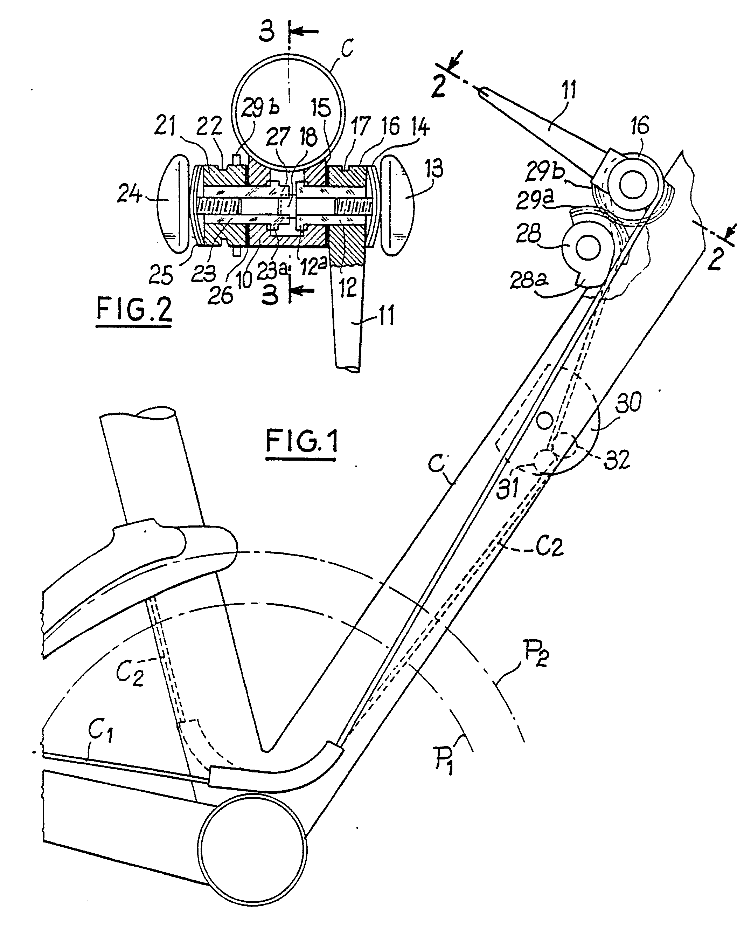

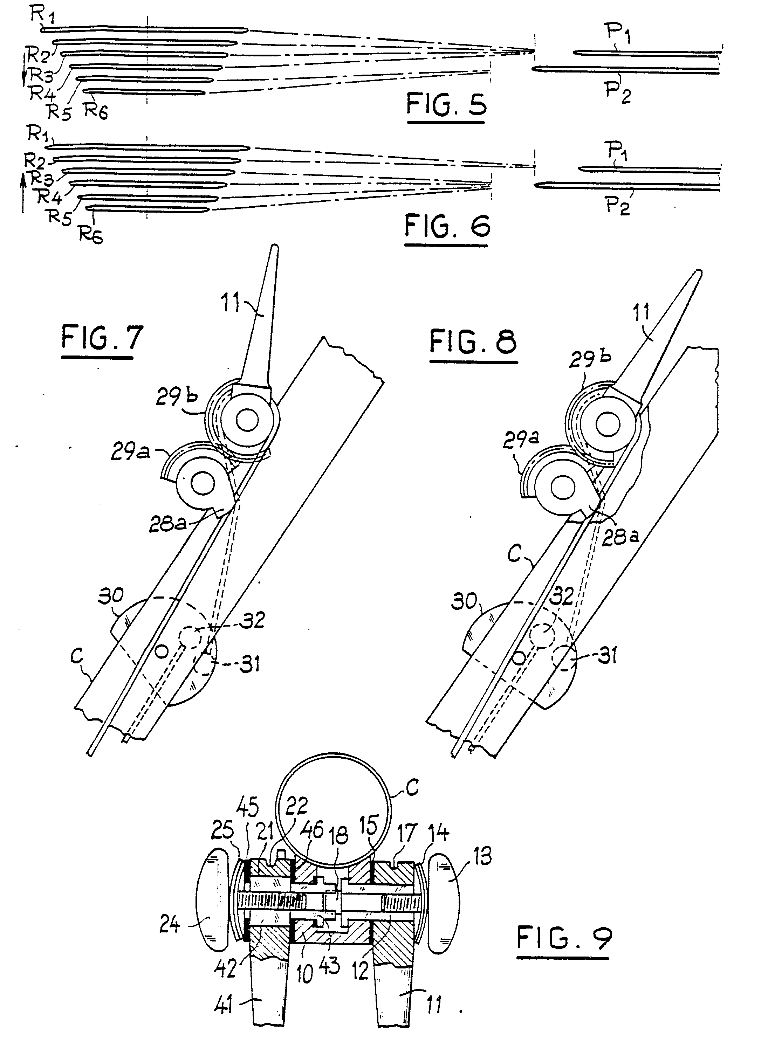

On voit sur la Fig. 1 une partie d'un cadre de cycle C par rapport auquel ont été disposés, de façon très schématique, deux plateaux de pédalier $P_1$, $P_2$ et une roue libre comportant six pignons $R_1$, $R_2$, $R_3$, $R_4$, $R_5$, $R_6$ (Figs. 5 et 6). Deux mécanismes de dérailleurs qui peuvent être de conception et de construction classique sont prévus pour faire passer la chaîne d'un pignon à l'autre et d'un plateau à l'autre, ces deux dérailleurs étant actionnés respectivement par des câbles $C_1$ et $C_2$. On n'aperçoit au dessin que la chape A du dérailleur avant, le dérailleur arrière n'étant pas représenté.

Le dispositif de commande proprement dit est monté sur un support 10 lui-même fixé sur le cadre par tout moyen convenable. Il comprend une manette 11 solidaire en rotation d'une douille 12 elle-même montée rotative sur le support, la manette et la douille comportant des zones méplates assurant leur calage relatif en rotation. La manette est maintenue sur la douille au moyen d'une vis 13, avec interposition d'au moins une rondelle Belleville 14 entre la vis et la manette et d'une rondelle de friction 15 entre la manette et le support, tandis que la douille comporte une collerette de retenue 12$^a$. La manette comporte par ailleurs une portion de surface cylindrique 16 dans laquelle est ménagée une gorge 17 délimitant une came. Une extrémité du câble $C_1$ est guidée dans cette gorge, est accrochée sur la manette, le câble s'enroulant dans la gorge formant came comme cela est visible sur la Fig. 1. Ce câble est ensuite guidé par des moyens convenables et son extrémité opposée est reliée au dérailleur de roue libre.

Le deuxième câble $C_2$ d'actionnement du dérailleur de pédalier a une extrémité fixée sur un manchon 21 qui constitue un organe d'actionnement et qui comporte dans sa périphérie une gorge 22 analogue à celle de la manette 11. Ce manchon est également rendu solidaire en rotation au moyen de méplats ou d'un carré, d'une douille 23 montée rotative sur le support et retenue par rapport à ce support au moyen d'une collerette 23$^a$. Le manchon est maintenu sur la douille au moyen d'une vis 24, avec interposition d'une rondelle Belleville 25 et d'une rondelle de friction 26 entre le manchon et le support 10.

Les moyens d'accouplement entre la manette 11 et le manchon 21, c'est-à-dire entre les deux organes d'actionnement des câbles $C_1$, $C_2$ comprennent dans l'exemple choisi des ergots ou crabots 18, 27 s'étendant à partir des extrémités en regard des deux douilles 12 et 23. Il est prévu deux ergots diamétralement opposés solidaires de chaque douille, l'intervalle angulaire a entre les ergots d'une douille et ceux de l'autre douille étant par exemple égal à 54°, ces 54° correspondant à la course à vide ou course morte de la manette par rapport au manchon.

Le câble $C_2$ est enroulé sur le manchon 21 dans un sens opposé au sens d'enroulement du câble $C_1$ sur la manette 11 et il passe sur un galet de renvoi 28, comme représenté sur la Fig. 1. Cette disposition a pour conséquence d'inverser le sens de la commande du dérailleur de pédalier, par rapport aux agencements traditionnels, et de permettre ainsi la commande des deux dérailleurs par un organe de manœuvre unique. Suivant une caractéristique de l'invention, ce galet comporte une surface de came 28$^a$ et il est relié au manchon par un mécanisme d'entraînement constitué par deux secteurs dentés 29$^a$, 29$^b$ en prise, portés respectivement par le galet 28 et par le manchon 21.

Cette came est destinée à permettre un passage rapide du petit plateau vers le grand plateau.

Un dispositif formant relais est par ailleurs interposé sur le câble $C_2$. Ce câble est séparé en deux tronçons, un premier tronçon s'étendant entre le manchon 21 et une plaque 30 montée rotative sur le cadre autour d'un axe parallèle à l'axe d'articulation de la manette, et un deuxième tronçon s'étendant entre cette même plaque et le dérailleur avant. Les emplacements des points d'accrochage 31, 32 des deux tronçons du câble $C_2$ sur la plaque sont choisis de façon à obtenir un résultat qui sera exposé lors de la description du fonctionnement du dispositif.

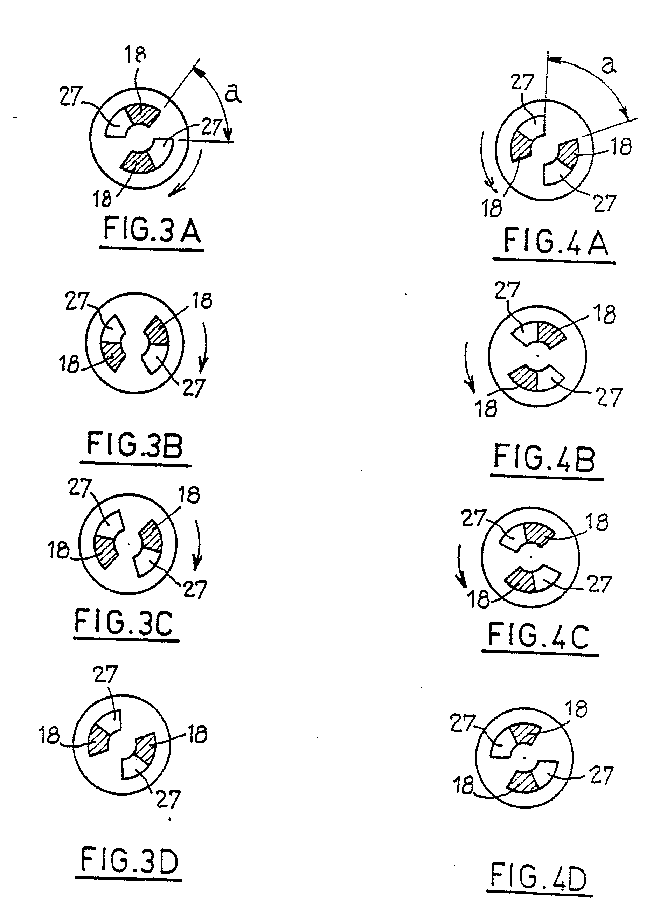

Les Fig. 3A à 3D et les Fig. 4A à 4D illustrent les positions successives des moyens d'accouplement entre la manette 11 et le manchon 21 pour un certain nombre de positions de cette manette, respectivement lors de déplacements du grand pignon vers le petit pignon, en ce qui concerne les Fig. 3A à 3D et le trajet inverse en ce qui concerne les Fig. 4A à 4D.

Quant aux Fig. 5 et 6, elles représentent les positions de la chaîne entre les pignons et les plateaux, pour un passage du grand pignon vers le petit pignon en ce qui concerne la Fig. 5 et le passage inverse en ce qui concerne la Fig. 6. Ces Figures ainsi que les Figures 7 et 8 vont permettre d'illustrer le fonctionnement de ce dispositif.

Si l'on considère tout d'abord que la chaîne occupe la position $P_1$, $R_1$ représentée sur la Fig. 5, c'est à dire que cette chaîne passe sur le petit plateau $P_1$ et le plus grand pignon $R_1$, ce qui correspond au rapport de démultiplication minimal, la séquence de fonctionnement est la suivante : la manette 11 occupe la position représentée à la Fig. 1 et à la Fig. 3A. En déplaçant cette manette dans le sens des aiguilles d'une montre en considérant la Fig. 1 sur une certaine course angulaire par exemple de l'ordre de 18°, on exerce sur le câble une traction suffisante pour provoquer le passage de la chaîne du pignon $R_1$ au pignon $R_2$. La douille 23 et le manchon 21 ne sont pas entraînés compte tenu du jeu angulaire a qui existe entre les ergots 18 et 27.

Il en est de même lors d'un déplacement supplémentaire dans le même sens de la manette 11, suffisant pour provoquer successivement le passage de la chaîne du pignon $R_2$ au pignon $R_3$ et du pignon $R_3$ au pignon $R_4$ ce qui amène les moyens d'accouplement entre la manette et le manchon dans la position représentée sur la Fig. 3B.

Lors d'un nouveau déplacement de la manette dans le sens des aiguilles d'une montre d'un angle de 18° environ, on provoque simultanément le passage de la chaîne du pignon $R_4$ au pignon $R_5$ et du petit plateau $P_1$ sur le grand plateau $P_2$ (Fig. 3C et Fig. 7). Grâce à la présence de la came 28ª qui est entraînée en même temps que le manchon 21, la course du câble $C_2$ est accrue et le passage du petit au grand plateau se produit franchement. Le relais intercalé sur le trajet du câble $C_2$ assure une transmission efficace de l'effort de traction entre les deux tronçons de câble, car les trajets des points d'accrochage 31, 32 ont alors essentiellement une composante à peu près parallèle à la direction axiale de ces deux câbles.

Enfin, un dernier déplacement de la manette jusque dans la position de la Fig. 8 amène les moyens d'accouplement dans la position de la Fig. 3D et la chaîne dans la position $R_6$, $P_2$ de la Fig. 5. Dans cette phase du fonctionnement, le relais intervient pour rendre pratiquement négligeable le déplacement longitudinal du tronçon aval du câble $C_2$ car le point de fixation 32a, contrairement à ce qui se passait précédemment une trajectoire dont la composante suivant la direction longitudinale du câble est très faible.

Lorsque la manette de commande est actionnée dans le sens contraire, c'est-à-dire à partir de la position représentée à la Fig. 8 vers les positions représentées aux Fig. 7 et 1, les positions successives au niveau de l'accouplement à course morte sont celles représentées aux Figs 4A à 4D. Sans entrer dans le détail de ces Figs on peut simplement constater que partant de la position $R_6$, $P_2$ de la Fig. 6, c'est entre le pignon $R_3$ et le pignon $R_2$ que s'effectue le passage du grand plateau $P_2$ au petit plateau $P_1$.

On dispose donc ainsi au total de huit rapports sur les douze possibles, ce qui procure un étagement tout à fait suffisant des rapports de démultiplication.

Dans le cas d'une roue libre à cinq pignons, le changement de plateau s'effectue de préférence lors du passage du pignon $R_3$ au pignon $R_4$ dans le sens descendant et lors du passage du pignon $R_3$ au pignon $R_2$ dans le sens montant, si l'on reprend un schéma analogue à celui des Figs 5 et 6.

Dans la variante représentée à la Fig. 9, il est prévu deux manettes de commande, l'une correspondant à la manette 11 de la Fig. 1 et l'autre 41, solidaire du manchon 21 et correspondant à la manette habituelle de commande du dérailleur avant. Dans cette variante, la douille 23 de la Fig. 1 est réalisée en deux parties 42 et 43 en contact de friction par leurs faces adjacentes. Des rondelles de friction 45, 46 sont prévues entre la manette 41 et la rondelle 25 ainsi qu'entre cette manette et le support 10. Ces différentes rondelles de friction ainsi que les vis de serrage 13, 24 permettent de réaliser des freins de force différente, le réglage étant effectué pour qu'il soit possible d'utiliser la manette 11 exactement dans les conditions décrites à propos du premier mode de réalisation, tout en permettant à l'utilisateur de se servir également de la deuxième manette 41 sans pour autant provoquer l'actionnement de la manette 11 et agir sur le câble $C_1$ de commande du dérailleur arrière.

De façon plus précise, la force de friction s'opposant au déplacement angulaire de l'ensemble 11, 12 est supérieure à la force de friction entre l'élément de douille 43 et le support 10, tandis que la liaison par friction entre les deux éléments 42, 43 est supérieure au freinage de la manette 41 par rapport au support 10.

Ce mode de réalisation permet donc à l'utilisateur de conserver une liberté de choix supplémentaire dans l'établissement du rapport de démultiplication au moyen du dérailleur avant et du dérailleur arrière.

Bien entendu de nombreuses autres variantes peuvent être apportées au dispositif suivant l'invention dont une caractéristique essentielle réside dans la possibilité de commander deux dérailleurs au moyen d'une seule manette. Il est clair que les moyens permettant de remplir cette fonction peuvent être très variés et que de nombreux modes de réalisation, différents de ceux qui n'ont été choisis qu'à titre d'exemple, peuvent être envisagés.

Par exemple le relais interposé sur le câble $C_2$ peut être remplacé par un dispositif compensateur à ressort, qui intervient pour absorber la traction exercée sur le câble, alors que le dérailleur avant a atteint sa position de fin de course déterminée par une butée positive. Ce dispositif compensateur peut être incorporé au câble lui-même ou à la biellette à laquelle est relié ce câble et qui agit sur un parallélogramme articulé ou moyen équivalent pour déplacer la chape du dérailleur avant.

**Revendications**

1. Dispositif de commande pour deux dérailleurs, respectivement de roue libre et de pédalier, pour cycle ou analogue, comprenant deux organes d'actionnement (16, 21) montés rotatifs sur un support (10) et reliés respectivement à l'un des deux dérailleurs par un câble de transmission

($C_1$, $C_2$) et une manette (11) formant un organe de manœuvre des deux organes d'actionnement, ces derniers étant reliés l'un à l'autre par l'intermédiaire d'un mécanisme de liaison à course morte (12, 18, 23, 27 ; 12, 18, 42, 43), caractérisé en ce que la manette est fixée à l'organe d'actionnement du dérailleur de roue libre et en ce que la liaison à course morte est telle que l'entraînement de l'organe d'actionnement associé au dérailleur de pédalier se produit pour deux positions différentes de la manette de manœuvre, selon que cette dernière est déplacée dans un sens ou dans l'autre.

2. Dispositif suivant la revendication 1, caractérisé en ce que le mécanisme de liaison à course morte comprend des crabots (18, 27) ou moyens équivalents, solidaires en rotation respectivement de l'un des deux organes d'actionnement et entre lesquels est prévu un jeu angulaire déterminé (a).

3. Dispositif d'actionnement suivant la revendication 2, caractérisé en ce que chaque organe d'actionnement est solidaire en rotation d'une douille (12, 23) portant lesdits crabots (18, 27) ou moyens équivalents.

4. Dispositif suivant l'une quelconque des revendications 1 à 3, caractérisé en ce qu'il est prévu un deuxième organe de manœuvre (41) associé à l'organe d'actionnement (21) du dérailleur de pédalier, et le mécanisme de liaison à course morte est unidirectionnel, c'est-à-dire qu'il n'assure la liaison que dans le sens de l'un des organes d'actionnement vers l'autre et qu'il est inopérant dans l'autre sens.

5. Dispositif suivant la revendication 4, caractérisé en ce qu'il est prévu, à cet effet, des moyens de friction agencés de façon à exercer des couples de freinage de valeurs différentes sur les organes d'actionnement.

6. Dispositif suivant l'une quelconque des revendications 3 à 5, caractérisé en ce que l'un des organes d'actionnement (21) est solidaire en rotation d'un premier tronçon de douille (42) relié par une liaison à friction à un deuxième tronçon de douille (43) qui porte desdits crabots ou moyens équivalents.

7. Dispositif suivant l'une quelconque des revendications 1 à 6, caractérisé en ce que l'agencement est tel qu'une rotation des organes d'actionnement dans le même sens agit sur les deux dérailleurs d'une façon qui provoque une variation également dans le même sens du rapport de démultiplication.

8. Dispositif suivant l'une quelconque des revendications 1 à 7, caractérisé en ce qu'il comporte des moyens (28ᵃ) pour amplifier le déplacement du dérailleur de pédalier, ces moyens entrant en action après rattrapage de la course morte du mécanisme de liaison.

9. Dispositif suivant la revendication 8, caractérisé en ce que lesdits moyens comprennent une came (28ᵃ) portée par un galet (28) sur lequel passe l'organe de transmission associé ($C_2$) des moyens d'entraînement (29ᵃ, 29ᵇ) étant prévus entre l'organe d'actionnement adjacent (21) et le galet (28).

10. Dispositif suivant la revendication 9, caractérisé en ce que les moyens d'entraînement comportent deux secteurs dentés (29ᵃ, 29ᵇ) portés respectivement par l'organe d'actionnement (21) et le galet (28).

11. Dispositif suivant l'une quelconque des revendications 1 à 10, caractérisé en ce qu'il comporte des moyens compensateurs (30, 31, 32) incorporés au dispositif de commande du dérailleur de pédalier et adaptés pour neutraliser au moins en partie un déplacement de l'organe d'actionnement du dérailleur de pédalier, sous l'effet du déplacement de l'organe d'actionnement du dérailleur de roue libre.

12. Dispositif suivant la revendication 11, caractérisé en ce que l'organe de transmission ($C_2$) associé au dérailleur de pédalier est réalisé en deux tronçons dont les extrémités adjacentes sont fixées (en 31, 32) sur une plaque (30) montée rotative sur le cadre du cycle.

**Claims**

1. A control device for two derailleurs, respectively for the free wheel and the crank gear for a cycle or the like, comprising two actuating elements (16, 21) rotatively mounted on a support (10) and respectively connected to one of the two derailleurs through a transmission cable ($C_1$, $C_2$) and a lever (11) constituting a shifting element for the two actuating elements, the latter being connected to each other by a connecting mechanism (12, 18, 23, 27 ; 12, 18, 42, 43) having a travel including a lost-motion part, characterised in that the lever is fixed to the actuating element of the free-wheel derailleur and the lost-motion connection is such that the driving of the actuating element associated with the crank gear derailleur occurs for two different positions of the shifting lever, depending on whether the latter is shifted in one direction or the other.

2. A device according to claim 1, characterised in that the lost-motion connecting mechanism comprises clutch dogs (18, 27) or the like which are connected to rotate respectively with one of the two actuating elements and between which a given angular clearance (a) is provided.

3. An actuating device according to claim 2, characterised in that each actuating element is connected to rotate with a sleeve (12, 23) carrying said clutch dogs (18, 27) or the like.

4. A device according to any one of the claims 1 to 3, characterised in that there is provided a second shifting element (41) associated with the actuating element (21) of the crank gear derailleur, and the lost-motion connecting mechanism is unidirectional, i. e. it affords the connection only in the direction from one of the actuating elements toward the other and is inoperative in the other direction.

5. A device according to claim 4, characterised in that there are provided for this purpose friction means adapted in such manner as to exert braking torques of different values on the actuating elements.

6. A device according to any one of the claims 3 to 5, characterised in that one of the actuating elements (21) is connected to rotate with a first sleeve section (42) connected by a friction connection to a second sleeve section (43) which carries said clutch dogs or the like.

7. A device according to any one of the claims 1 to 6, characterised in that the arrangement is such that a rotation of the actuating elements in the same direction acts on the two derailleurs in such manner as to produce a variation also in the same sense of the speed-reducing ratio.

8. A device according to any one of the claims 1 to 7, characterised in that it comprises means (28ª) for increasing the displacement of the crank gear derailleur, these means coming into action after the lost-motion of the connecting mechanism has been taken up.

9. A device according to claim 8, characterised in that said means comprise a cam (28ª) carried by a roller (28) around which passes the associated transmission element ($C_2$), driving means (29ª, 29ᵇ) being provided between the adjacent actuating element (21) and the roller (28).

10. A device according to claim 9, characterised in that the driving means comprise two toothed sectors (29ª, 29ᵇ) respectively carried by the actuating element (21) and the roller (28).

11. A device according to any one of the claims 1 to 10, characterised in that it comprises compensating means (30, 31, 32) incorporated in the control device of the crank gear derailleur and adapted to neutralize at least partly a displacement of the actuating element of the crank gear derailleur under the effect of the displacement of the actuating element of the free-wheel derailleur.

12. A device according to claim 11, characterised in that the transmission element ($C_2$) associated with the crank gear derailleur is made in two sections, the adjacent ends of which sections are fixed (at 31, 32) to a plate (30) rotatively mounted on the frame of the cycle.

## Patentansprüche

1. Einrichtung zur Betätigung von zwei Schaltklauen, jeweils für ein Freilaufritzel und einen Pedalzahnkranz für Fahrräder oder dergleichen, umfassend zwei Betätigungsorgane (16, 21), welche drehbar auf einem Support (10) angeordnet und jeweils über ein Übertragungskabel ($C_1$, $C_2$) mit einer der beiden Schaltklauen verbunden sind, sowie einen Handhebel (11), welcher ein Schaltorgan für die beiden Betätigungsorgane bildet, wobei die beiden letzteren miteinander über einen Mechanismus mit Totgangverbindung (12, 18, 23, 27 ; 12, 18, 42, 43) verbunden sind, dadurch gekennzeichnet, daß der Handhebel an dem Betätigungsorgan der Schaltklaue für das Freilaufritzel befestigt ist und daß die Totgangverbindung derart ausgebildet ist, daß die Mitnahme des dem Pedalzahnkranz zugeordneten Betätigungsorgans in zwei unterschiedlichen Stellungen des Schalt-Handhebels erfolgt, je nachdem, ob dieser letztere in der einen oder der anderen Schaltrichtung betätigt wird.

2. Einrichtung nach Anspruch 1, dadurch gekennzeichnet, daß der Mechanismus mit Totgangverbindung Klauen (18, 27) oder äquivalente Mittel umfaßt, die in Drehrichtung fest mit jeweils einem der beiden Betätigungsorgane verbunden sind und zwischen denen ein bestimmtes Winkelspiel (a) vorgesehen ist.

3. Einrichtung nach Anspruch 2, dadurch gekennzeichnet, daß jedes Betätigungsorgan in Drehrichtung fest mit einer Hülse (12, 13) verbunden ist, welche die Klauen (18, 27) oder äquivalenten Mittel tragen.

4. Einrichtung nach einem der Ansprüche·1 bis 3, dadurch gekennzeichnet, daß ein zweites Schaltorgan (41) vorgesehen ist, welches dem Betätigungsorgan (21) der Schaltklaue für den Pedalzahnkranz zugeordnet ist, und daß der Mechanismus mit Totgangverbindung nur eine Wirkrichtung hat, d. h., daß er eine Verbindung nur in Richtung von einem der Betätigungsorgane zum anderen herstellt, in der anderen Richtung jedoch wirkungslos ist.

5. Einrichtung nach Anspruch 4, dadurch gekennzeichnet, daß zu diesem Zweck Bremsmittel vorgesehen sind, die so betätigt werden, daß sie Bremsmomente unterschiedlicher Größe auf die Betätigungsorgane ausüben.

6. Einrichtung nach einem der Ansprüche 3 bis 5, dadurch gekennzeichnet, daß eines (21) der Betätigungsorgane drehfest mit einem ersten Hülsenabschnitt (42) verbunden ist, welcher über eine Reibverbindung mit einem zweiten Hülsenabschnitt (43) verbunden ist, der die Klauen oder äquivalenten Mittel trägt.

7. Einrichtung nach einem der Ansprüche 1 bis 6, dadurch gekennzeichnet, daß die Betätigung in der Weise erfolgt, daß eine Drehung der Betätigungsorgane im gleichen Drehsinn auf die beiden Schaltklauen in einer Weise wirkt, welche eine Übersetzungsänderung ebenfalls im gleichen Sinne bewirkt.

8. Einrichtung nach einem der Ansprüche 1 bis 7, dadurch gekennzeichnet, daß sie Mittel (28ª) zur Veränderung des Versatzes der Schaltklaue für den Pedalzahnkranz umfaßt, wobei diese Mittel nach Totgangdurchlauf des Verbindungsmechanismus in Aktion treten.

9. Einrichtung nach Anspruch 8, dadurch gekennzeichnet, daß diese Mittel einen Nocken (28ª) umfassen, welcher an einer Rolle (28) angeordnet ist, über welche das zugeordnete Übertragungsorgan ($C_2$) für die Mitnahmemittel (29ª, 29ᵇ) läuft, die zwischen dem benachbarten Betätigungsorgan (21) und der Rolle (28) vorgesehen sind.

10. Einrichtung nach Anspruch 9, dadurch gekennzeichnet, daß die Mitnahmemittel zwei Verzahnungssektoren (29ª, 29ᵇ) umfassen, die jeweils am Betätigungsorgan (21) bzw. der Rolle (28) angeordnet sind.

11. Einrichtung nach einem der Ansprüche 1 bis 10, dadurch gekennzeichnet, daß sie Kompensationsmittel (30, 31, 32) umfaßt, welche mit der Betätigungseinrichtung für die Schaltklaue des Pedalzahnkranzes zusammengefaßt ist und dazu dient, zumindest teilweise einen Versatz des Betätigungsorgans der Schaltklaue für den Pedalzahnkranz als Folge des Versatzes des Betätigungsorgans der Schaltklaue für das Freilaufritzel zu neutralisieren.

12. Einrichtung nach Anspruch 11, dadurch gekennzeichnet, daß das Übertragungsorgan (C₂), welches der Schaltklaue des Pedalzahnkranzes zugeordnet ist, aus zwei Abschnitten gebildet ist, deren benachbarte Enden (in 31, 32) an einer Platte (30) befestigt sind, die drehbar am Fahrradrahmen montiert ist.

0 102 259

FIG.2

FIG.1

1

FIG.3A

FIG.3B

FIG.3C

FIG.3D

FIG.4A

FIG.4B

FIG.4C

FIG.4D

FIG. 5

FIG. 6

FIG. 7

FIG. 8

FIG. 9